# EUROPEAN PATENT SPECIFICATION

(11) **EP 3 157 356 B1**
(45) Date of publication and mention of the grant of the patent: **06.03.2019**
(21) Application number: 15729430.7
(22) Date of filing: 11.06.2015
(51) Int. Cl.: A23L 7/109, A21D 2/02

(54) **NON-FRIED NOODLE DOUGH COMPRISING SWEET POTATO FLOUR AND PROCESS FOR ITS PREPARATION**
NICHTFRITTIERTER NUDELTEIG MIT SÜSSKARTOFFELMEHL UND VERFAHREN ZU DESSEN HERSTELLUNG
PÂTE À NOUILLES NON FRITES COMPRENANT DE LA FARINE DE PATATE DOUCE ET SON PROCÉDÉ DE PRÉPARATION

(30) Priority: 23.06.2014 EP 14173508
(43) Date of publication of application: 26.04.2017
(73) Proprietor: Nestec S.A., 1800 Vevey (CH)
(72) Inventor: NG, Yun Ting Sherrilyn, Singapore 120112 (SG); CHIU, Ayrine Natalie, Singapore 12046 (SG); ONG, Moi Kim, Singapore 73079 (SG); LIM, Allan, Singapore 545019 (SG)
(74) Representative: Mollet, Beat Max
(86) International application number: PCT/EP2015/063070
(87) International publication number: WO 2015/197371

(56) References cited:
- US-A- 4 230 735
- US-A- 4 820 529
- US-A- 5 244 689
- YAN J: "Instant noodles of not fried miscellaneous cereals, and production method", WPI / THOMSON,, vol. 2007, no. 61, 9 May 2007 (2007-05-09) , XP002671152, & CN 1 957 744 A (YAN JUNBO [CN]) 9 May 2007 (2007-05-09)
- DATABASE WPI Week 201429 Thomson Scientific, London, GB; AN 2014-H18824 XP002732834, & CN 103 609 946 A (YONGZHOU HUALI COMML CO LTD) 5 March 2014 (2014-03-05)

## Description

The present invention concerns a non-fried noodle dough comprising sweet potato flour and a method for its preparation.

Biofortification is a new approach of increasing bioabsorbable micronutrients in staple food crops. It is viewed as a simple and inexpensive way to deal with micronutrient deficiencies (for example, iron, vitamin A, zinc and iodine), especially in developing countries. Crops such as sweet potato, cassava and wheat with high content of carotenoids and zinc have already been developed. For example, biofortified sweet potato high in pro-vitamin A carotenoid content has been developed by the Malaysian Agriculture Research and Development Institute (MARDI) as an alternative cash crop to tobacco.

Developing food products containing biofortified crops is a viable approach to delivering nutrient fortification in a natural and sustainable way. However, carotenoid-containing crops such as sweet potatoes face challenges in oxidative degradation during production and shelf life particularly of dehydrated food products. This in turn affects drastically the nutritional value.

Several approaches have been described in the prior art to stabilize β-carotene per se, and β-carotene containing raw materials into pasta or noodles.

Existing art describes the addition of antioxidants to preserve and enhance the shelf-life of foods containing high levels of carotenoids. EP 2,488,041 describes the use of calcium ascorbate to prevent the oxidation of carotenoids and the polyunsaturated fatty acids in dried foods. EP 2,654,464 describes the use of ascorbic acid in combination with an encapsulation process to effectively stabilize carotenoids in short cooking dry pasta.

Documents CN 1 957 744, CN 103 609 946, US 4 820 529, US 5 244 689 and US 4 230 735 disclose various methods of obtaining similar noodles.

The object of the present invention is to improve the state of the art and to provide a non-fried noodle product in the form of a noodle dough or noodle cake which has an improved retention of naturally derived carotenoids from sweet potato flour. It is a further objective of the invention to provide noodle products with a visually appealing natural colour and appearance brought about by the retention of the natural carotenoids in the product.

The object of the present invention is achieved by the subject matter of the independent claims. The dependent claims further develop the idea of the present invention.

The invention relates to method for making a non-fried noodle dough comprising the steps of:
**a)** mixing sweet potato flour with an oil;
**b)** heating the mixture of step a) to a temperature from 30°C to 75°C for 5 to 30 minutes;
**c)** adding wheat flour, salt and water to the mixture of sweet potato flour and oil after step b), and mixing all together to form a dough mixture;
**d)** processing the dough mixture by kneading, rolling into sheets, cutting into strips and/or steaming.

A further aspect of the present invention is a method for making a non-fried noodle cake comprising the steps of first making a non-fried noodle dough according to the present invention, and then drying the resulting dough mixture by air, preferably by hot air.

A still further aspect of the present invention is a noodle cake obtainable by the method of the present invention.

The inventors found that when integrating an oil into a composition and process for making a noodle dough before any drying step, naturally present beta-carotene from the sweet potato flour present in the noodle dough is better retained and retained for a longer period of time in a final noodle product, such as a dry noodle cake, than when no oil was present in the primary non-fried noodle dough. Particularly, the inventors observed that e.g. after a period of storage of the dry noodle cakes for 20 weeks at a challenging 30°C under light, the retention of the beta-carotene in noodle products made with oil in the dough had at least a two-fold better retention value. Evidence thereof is provided in the Experimental part of this document.

### Brief Description of the Drawings

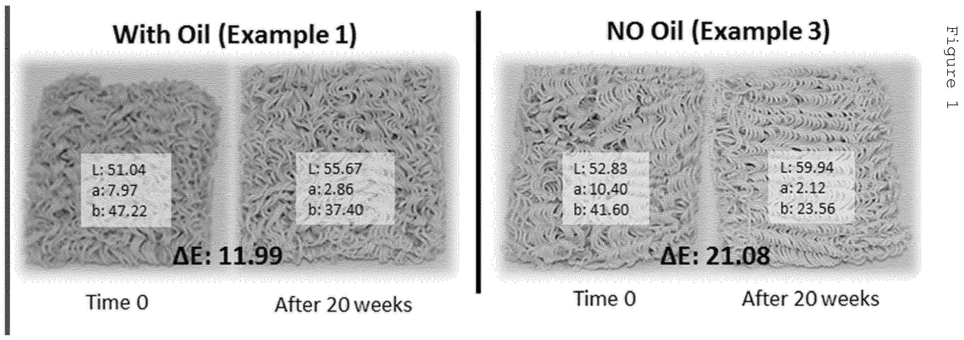

- Figure 1:: Picture of noodle cakes, made with and without oil, after drying (time 0) and after 20 weeks storage at 30°C.

### Detailed Description of the Invention

The present invention pertains to a non-fried noodle dough comprising wheat flour, 5-30 wt% sweet potato flour, 1-15 wt% oil, salt and water. Preferably, the noodle dough comprises 14-28 wt% sweet potato flour.

A "non-fried" noodle dough means that the noodle dough has not been fried or cooked in an oil or another fat.

"Noodle dough" is a dough for making noodles. Typically, a noodle dough is a non-fermented, unleavened dough.

"Sweet potato flour" is flour made from sweet potatoes. Sweet potatoes pertain herein to plants belonging to the species *Ipomoea batatas.*

In a preferred embodiment of the present invention the sweet potato is selected from an orange-fleshed sweet potato variety of the species *Ipomoea batatas.* Orange-fleshed sweet potato varieties have the advantage of having higher amounts of beta-carotene than yellow- or white-fleshed sweet potato varieties.

Preferably, the noodle dough of the present invention comprises 2.5-8.0 wt% oil, and preferably from 3.0 to 7.5 wt% oil.

In an embodiment, the oil used in the present invention is liquid oil at 25°C. Preferably, the oil is selected from the group consisting of palm oil, palm olein, olive oil, corn oil, sunflower oil and canola oil, or a combination thereof.

In a preferred embodiment, the noodle dough of the present invention comprises the oil and the sweet potato flour in a ratio by weight of the oil versus the sweet potato flour from 0.1 to 0.5, preferably from 0.2 to 0.35, more preferably from 0.2 to 0.3. This selected range of the oil versus sweet potato flour ratio provides on one hand sufficient oil into the noodle dough composition to improve the stability and retention period of the beta-carotene present in the sweet potato flour. On the other hand, it allows to minimize the amount of oil needed to be added to the noodle dough and thereby to unnecessarily increase the content of oil/fat of the noodle dough and ultimately of the final noodle cake.

The noodle dough of the present invention comprises salt. Preferably, the salt comprises a salt selected from the group consisting of sodium chloride, sodium carbonate, potassium carbonate and sodium polyphosphate, or a combination thereof. More preferably, a salt composition known under the name Kansui is selected as salt for the present invention. Kansui can be used in the present invention either in the form of a salt powder or as an aqueous solution for improving the stability of the texture, firmness and flavors of the noodles.

In a further embodiment, the noodle dough of the present invention further comprises a gum, preferably selected from the group consisting of guar gum, locust bean gum, alginate and carboxy-methyl-cellulose, or a combination thereof. This will help to improve the texture of the noodle dough and noodle cake.

In a further aspect, the invention relates to method for making a non-fried noodle dough comprising the steps of:
**a)** mixing sweet potato flour with an oil;
**b)** heating the mixture of step a) to a temperature from 30°C to 75°C for 5 to 30 minutes;
**c)** adding wheat flour, salt and water to the mixture of sweet potato flour and oil after step b), and mixing all together to form a dough mixture;
**d)** processing the dough mixture by kneading, rolling into sheets, cutting into strips and/or steaming.

In a preferred embodiment, the step b) of the method of the present invention is carried out at a temperature from 55°C to 75°C for 5 to 15 minutes, and more preferably at a temperature from 65°C to 75°C for 5 to 10 minutes.

A still further aspect of the present invention is the method for making a non-fried noodle cake comprising the steps of first making a non-fried noodle dough according to the present invention, and then drying the resulting dough mixture by air, preferably by hot air. The step of drying can be carried out in a hot air oven or by impingement drying.

Another aspect of the present invention is a noodle cake obtained and/or obtainable by the present method. Preferably, the noodle cake has a water content which is below 7 wt%.

In a preferred embodiment, the noodle cake of the present invention comprises a concentration of beta-carotene which is at least 2 µg/g, preferably at least 3 µg/g, more preferably at least 5 µg/g, after 20 weeks of storage time of the dry noodle cake at 30°C.

Those skilled in the art will understand that they can freely combine all the features of the present invention disclosed herein. In particular, features described for the non-fried noodle dough product can be combined with the method for making a non-fried noodle dough, and vice versa.

Further advantages and features of the present invention are apparent from the figure and the examples.

### Example 1: Sweet potato instant noodle processing

4.17 kg of sweet potato flour is mixed with 1.13 kg of oil at 75°C for 5 minutes. The sweet potato flour has a dry content of 93%. The weight ratio of oil to sweet potato flour is 0.27.

6.25 kg of wheat flour, 0.20 kg of wheat gluten, 3.15 kg of water and 0.10 kg of salt and gums are then mixed in for 20 minutes.

The instant noodle composition is as follows:

| | |
|---|---|
| Wheat flour | 41.7% |
| Sweet potato flour | 27.8% |
| Water | 21.0% |
| Oil | 7.5% |
| Wheat gluten | 1.3% |
| Salt, gums | 0.7% |

The mixture obtained is rolled into dough sheets, cut into noodles, steamed and finally air-dried. The maximum final moisture content of the noodle cake is 7%.

### Example 2: Sweet potato instant noodle processing

2.20 kg of sweet potato flour is mixed with 0.45 kg of oil at 75°C for 5 minutes. The sweet potato flour has a dry content of 93%. The weight ratio of oil to sweet potato flour is 0.20.

8.82 kg of wheat flour, 0.28 kg of wheat gluten, 3.15 kg of water and 0.10 kg of salt and gums are then mixed in for 20 minutes.

The instant noodle composition is as follows:

| | |
|---|---|
| Wheat flour | 58.8% |
| Sweet potato flour | 14.7% |
| Water | 21.0% |
| Oil | 3.0% |
| Wheat gluten | 1.8% |
| Salt, gums | 0.7% |

The mixture obtained is rolled into dough sheets, cut into noodles, steamed and finally air-dried. The maximum final moisture content of the noodle cake is 7%.

### Example 3: Sweet potato instant noodle processing without the use of an oil (Comparative to Example 1)

4.38 kg of sweet potato flour, 6.57 kg of wheat flour, 0.20 kg of wheat gluten, 3.75 kg of water and 0.10 kg of salt and gums are mixed for 20 minutes.

The sweet potato flour has a dry content of 93%.

The instant noodle dough composition is as follows:

| | |
|---|---|
| Wheat flour | 43.8% |
| Sweet potato flour | 29.2% |
| Water | 25.0% |
| Wheat gluten | 1.3% |
| Salt, gums | 0.7% |

The mixture obtained is rolled into dough sheets, cut into noodles, steamed and finally air-dried. The maximum final moisture content of the noodle cake is 7%.

### Example 4: Sweet potato instant noodle processing without the use of an oil (Comparative to Example 2)

2.295 kg of sweet potato flour, 9.165 kg of wheat flour, 0.285 kg of wheat gluten, 3.15 kg of water and 0.105 kg of salt and gums are mixed for 20 minutes.

The sweet potato flour has a dry content of 93%.

The instant noodle dough composition is as follows:

| | |
|---|---|
| Wheat flour | 61.1% |
| Sweet potato flour | 15.3% |
| Water | 21.0% |
| Wheat gluten | 1.9% |
| Salt, gums | 0.7% |

The mixture obtained is rolled into dough sheets, cut into noodles, steamed and finally air-dried. The maximum final moisture content of the noodle cake is 7%.

### Example 5: Determination of β-carotene content & colour measurement

### Extraction of β-carotene

2 g of grinded sample was made into a paste by adding 6ml of water. The paste was hydrolysed using 1 ml of 20mg/ml Takadiastase enzyme solution, followed by 1ml of 20mg/ml Papain enzyme solution at 40 deg C for 15 min. Sample was subsequently extracted with Tetrahydrofuran-Methyl tert-butyl ether (1:1, v/v) solution. The solvent was evaporated to dryness, reconstituted with methanol-MTBE (9:1, v/v), filtered and injected to HPLC.

### HPLC conditions

The liquid chromatograph was performed using the analytical column Waters YMC Carotenoids C₃₀, 5 µm, 3 x 250 mm. Organic solvents for the HPLC mobile phases were HPLC-grade. Two mobile phases were used: mobile phase A comprising methanol: methyl-tert-butyl ether: ammonium acetate (95:3:2) and mobile phase B comprising comprising methanol: methyltertbutylether: ammonium acetate (25:73:2). The flow rate of the mobile phase was set at 0.6 mL/min and the detector wavelength was set at 450 nm for the detection of β-carotene. Column temperature was set at 30 deg C. The gradient elution followed the following profile:

| Min | Mobile phase A (%) | Mobile phase B (%) |
|---|---|---|
| 0 | 87.5 | 12.5 |
| 5 | 87.5 | 12.5 |
| 25 | 65.0 | 35.0 |
| 30 | 87.5 | 12.5 |
| 35 | 87.5 | 12.5 |

### Calculation of β-carotene concentration

The identification and quantification of β-carotene concentration was done by comparing the retention time and peak area of the sample with peak area of the standards.

All statistical analyses were carried out at 95% confidence interval.

### Colour measurement

Colour measurement was taken using Konica Minolta Colorimeter CR-400, expressed in L*a*b values and calculated for ΔE, which measures the difference in colour at time T and time 0.

### Example 6: Evaluation of β-carotene retention with time

### Shelf-life study conditions

Sweet potato instant noodles with oil were produced according to the method described in Examples 1 & 2, while control samples without oil were produced according to the method described in the comparative Examples 3 & 4. The noodles were stored in both metallized and Polyethylene packaging. All noodles were stored in a 30°C incubator room, under lighted conditions and analyzed for β-carotene content and colour according to the methods described in Example 5. The shelf life study was conducted for 20 weeks. The results are shown in Table 1 and in Figure 1.

### Table 1. Comparison of β-carotene retention in sweet potato instant noodles with and without oil

Regardless of packaging material, the results show that sweet potato noodles produced with oil (Examples 1 & 2) all have higher β-carotene retention compared to their control samples without oil: Examples 3 & 4.

In addition, colour measurement results also showed that sweet potato noodles with oil (example 1) had better colour retention (lower ΔE), compared to the control (example 3).

| **Examples** | **Packaging Material** | **Condition** | **β-carotene levels [µg/g](dry basis)** | | **Retention [%]** |
|---|---|---|---|---|---|
| | | | **Time 0** | **After 20 weeks** | |
| 1 | Metallized | **With Oil** | 49.46 | 3.75 | **7.59** |
| | Polyethylene | | 49.46 | 2.7 | **5.45** |
| 3 | Metallized | Without Oil | 60.99 | 1.9 | 3.12 |
| | Polyethylene | | 60.99 | 1.07 | 1.75 |
| 2 | Metallized | **With Oil** | 31.98 | 5.4 | **16.89** |
| | Polyethylene | | 31.98 | 1.63 | **5.10** |
| 4 | Metallized | Without Oil | 41.5 | 0.83 | 2.00 |
| | Polyethylene | | 41.5 | 0.77 | 1.86 |

## Claims

1. Method for making a non-fried noodle dough comprising the steps of:
**a)** mixing sweet potato flour with an oil;
**b)** heating the mixture of step a) to a temperature from 30°C to 75°C for 5 to 30 minutes;
**c)** adding wheat flour, salt and water to the mixture of sweet potato flour and oil after step b), and mixing all together to form a dough mixture;
**d)** processing the dough mixture by kneading, rolling into sheets, cutting into strips and/or steaming.

2. The method according to claim 1, wherein step b) is carried out at a temperature from 55°C to 75°C for 5 to 15 minutes, preferably at a temperature from 65°C to 75°C for 5 to 10 minutes.

3. The method according to claim 1 or 2, wherein the non-fried noodle dough comprises wheat flour, 5-30 wt% sweet potato flour, 1-15 wt% oil, salt and water.

4. The method according to one of the preceding claims, wherein the noodle dough comprises 14-28 wt% sweet potato flour.

5. The method according to one of the preceding claims, wherein the sweet potato is selected from an orange-fleshed sweet potato variety of the species *Ipomoea batatas.*

6. The method according to one of the preceding claims, wherein the noodle dough comprises 2.5-8.0 wt% oil, preferably from 3.0 to 7.5 wt% oil.

7. The method according to one of the preceding claims, wherein the oil is liquid oil at 25°C.

8. The method according to one of the preceding claims, wherein the oil is selected from the group consisting of palm oil, palm olein, olive oil, corn oil, sunflower oil and canola oil, or a combination thereof.

9. The method according to one of the preceding claims, wherein the ratio by weight of the oil versus the sweet potato flour in the noodle dough is from 0.1 to 0.5, preferably from 0.2 to 0.35.

10. The method according to one of the preceding claims, wherein the salt comprises a salt selected from the group consisting of sodium chloride, sodium carbonate, potassium carbonate and sodium polyphosphate, or a combination thereof.

11. The method according to one of the preceding claims, wherein the noodle dough further comprises a gum, preferably selected from the group consisting of guar gum, locust bean gum, alginate and carboxy-methyl-cellulose, or a combination thereof.

12. Method for making a non-fried noodle cake comprising the steps of first making a non-fried noodle dough according to one of the claims 1 to 11, and then drying the resulting dough mixture by air, preferably by hot air.

13. Noodle cake obtainable by the method of claim 12.

14. The noodle cake of claim 13, wherein the water content is below 7 wt%.

15. The noodle cake of claim 13 or 14, wherein the concentration of beta-carotene is at least 2 µg/g, preferably at least 3 µg/g, after 20 weeks of storage of the noodle cake at 30°C.

## Patentansprüche

1. Verfahren zum Herstellen eines nicht gebratenen Nudelteigs, das die folgenden Schritte umfasst:
a) Mischen von Süßkartoffelmehl mit einem Öl;
b) Erwärmen der Mischung von Schritt a) auf eine Temperatur von 30 °C bis 75 °C für 5 bis 30 Minuten;
c) Zugeben von Weizenmehl, Salz und Wasser zu der Mischung von Süßkartoffelmehl und Öl nach Schritt b) und Zusammenmischen von allem, um eine Teigmischung zu bilden;
d) Verarbeiten der Teigmischung durch Kneten, Ausrollen zu Schichten, Schneiden in Streifen und/oder Dämpfen.

2. Verfahren nach Anspruch 1, wobei Schritt b) bei einer Temperatur von 55 °C bis 75 °C für 5 bis 15 Minuten, vorzugsweise bei einer Temperatur von 65 °C bis 75 °C für 5 bis 10 Minuten durchgeführt wird.

3. Verfahren nach Anspruch 1 oder 2, wobei der nicht gebratene Nudelteig Weizenmehl, zu 5-30 Gew.-% Süßkartoffelmehl, zu 1-15 Gew.-% Öl, Salz und Wasser umfasst.

4. Verfahren nach einem der vorstehenden Ansprüche, wobei der Nudelteig zu 14-28 Gew.-% Süßkartoffelmehl umfasst.

5. Verfahren nach einem der vorstehenden Ansprüche, wobei die Süßkartoffel aus einer orange-fleischigen Süßkartoffelvarietät der Art Ipomoea batatas ausgewählt ist.

6. Verfahren nach einem der vorstehenden Ansprüche, wobei der Nudelteig zu 2,5-8,0 Gew.-% Öl, vorzugsweise von 3,0 bis 7,5 Gew.-% Öl umfasst.

7. Verfahren nach einem der vorstehenden Ansprüche, wobei das Öl flüssiges Öl bei 25 °C ist.

8. Verfahren nach einem der vorstehenden Ansprüche, wobei das Öl ausgewählt ist aus der Gruppe, bestehend aus Palmöl, Palmolein, Olivenöl, Maisöl, Sonnenblumenöl und Rapsöl oder einer Kombination davon.

9. Verfahren nach einem der vorstehenden Ansprüche, wobei das Gewichtsverhältnis des Öls zu dem Süßkartoffelmehl in dem Nudelteig von 0,1 bis 0,5, vorzugsweise von 0,2 bis 0,35 beträgt.

10. Verfahren nach einem der vorstehenden Ansprüche, wobei das Salz ein Salz umfasst, das ausgewählt ist aus der Gruppe, bestehend aus Natriumchlorid, Natriumcarbonat, Kaliumcarbonat und Natriumpolyphosphat oder einer Kombination davon.

11. Verfahren nach einem der vorstehenden Ansprüche, wobei der Nudelteig ferner Gummi umfasst, der vorzugsweise ausgewählt ist aus der Gruppe, bestehend aus Guargummi, Johannisbrotgummi, Alginat und Carboxymethylcellulose oder einer Kombination davon.

12. Verfahren zum Herstellen eines nicht gebratenen Nudelkuchens, umfassend zunächst die Schritte des Herstellens eines nicht gebratenen Nudelteigs nach einem der Ansprüche 1 bis 11 und anschließendes Trocknen der resultierenden Teigmischung durch Luft, vorzugsweise durch Heißluft.

13. Nudelkuchen, herstellbar durch das Verfahren nach Anspruch 12.

14. Nudelkuchen nach Anspruch 13, wobei der Wassergehalt unter 7 Gew.-% liegt.

15. Nudelkuchen nach Anspruch 13 oder 14, wobei die Konzentration von beta-Carotin mindestens 2 µg/g, vorzugsweise mindestens 3 µg/g nach 20 Wochen Lagerung des Nudelkuchens bei 30 °C beträgt.

## Revendications

1. Procédé de fabrication d'une pâte à nouilles non frite comprenant les étapes de :
a) mélange de farine de patate douce avec une huile ;
b) chauffage du mélange de l'étape a) à une température de 30 °C à 75 °C pendant 5 à 30 minutes ;
c) ajout de farine de blé, de sel et d'eau au mélange de farine de patate douce et d'huile après l'étape b), et mélange de l'ensemble pour former un mélange de pâte ;
d) traitement du mélange de pâte par pétrissage, roulage en feuilles, découpe en bandes et/ou passage à la vapeur.

2. Procédé selon la revendication 1, dans lequel l'étape b) est réalisée à une température de 55 °C à 75 °C pendant 5 à 15 minutes, de préférence à une température de 65 °C à 75 °C pendant 5 à 10 minutes.

3. Procédé selon la revendication 1 ou 2, dans lequel la pâte à nouilles non frite comprend de la farine de blé, 5 à 30 % en poids de farine de patate douce, 1 à 15 % en poids d'huile, du sel et de l'eau.

4. Procédé selon l'une des revendications précédentes, dans lequel la pâte à nouilles comprend 14 à 28 % de farine de patate douce.

5. Procédé selon l'une des revendications précédentes, dans lequel la patate douce est choisie parmi une variété de patate douce à chair orange de l'espèce *Ipomoea batatas.*

6. Procédé selon l'une des revendications précédentes, dans lequel la pâte à nouilles comprend 2,5 à 8,0 % en poids d'huile, de préférence de 3,0 à 7,5 % en poids d'huile.

7. Procédé selon l'une des revendications précédentes, dans lequel l'huile est de l'huile liquide à 25 °C.

8. Procédé selon l'une des revendications précédentes, dans lequel l'huile est choisie dans le groupe constitué d'huile de palme, oléine de palme, huile d'olive, huile de maïs, huile de tournesol et huile de canola ou une combinaison de celles-ci.

9. Procédé selon l'une des revendications précédentes, dans lequel le rapport pondéral de l'huile par rapport à la farine de patate douce dans la pâte à nouilles va de 0,1 à 0,5, de préférence de 0,2 à 0,35.

10. Procédé selon l'une quelconque des revendications précédentes, dans lequel le sel comprend un sel choisi dans le groupe constitué de chlorure de sodium, carbonate de sodium, carbonate de potassium et polyphosphate de sodium, ou une combinaison de ceux-ci.

11. Procédé selon l'une quelconque des revendications précédentes, dans lequel la pâte à nouilles comprend en outre une gomme, choisie de préférence parmi le groupe constitué de gomme de guar, gomme de caroube, alginate et carboxyméthylcellulose, ou une combinaison de ceux-ci.

12. Procédé de fabrication d'un gâteau de nouilles non frit comprenant les étapes consistant à réaliser d'abord une pâte à nouilles non frite selon l'une des revendications 1 à 11, puis à sécher le mélange de pâte obtenu à l'air, de préférence à l'air chaud.

13. Gâteau de nouilles pouvant être obtenu par le procédé de la revendication 12.

14. Gâteau de nouilles de la revendication 13, dans lequel la teneur en eau est inférieure à 7 % en poids.

15. Gâteau de nouilles de la revendication 13 ou 14, dans lequel la concentration en bêta-carotène est d'au moins 2 µg/g, de préférence au moins 3 µg/g, après 20 semaines de stockage du gâteau de nouilles à 30 °C.
